# EUROPÄISCHE PATENTSCHRIFT

(11) **EP 2 322 317 B1**
(45) Veröffentlichungstag und Bekanntmachung des Hinweises auf die Patenterteilung: **14.11.2012**
(21) Anmeldenummer: 10013606.8
(22) Anmeldetag: 13.10.2010
(51) Int. Cl.: B23Q 9/00, B23D 49/10

(54) **Führungsvorrichtung für eine Hand-Werkzeugmaschine und Hand-Werkzeugmaschine**
Guide device for a hand machine tool and hand machine tool
Dispositif de transport pour une machine-outil manuelle et machine-outil manuelle

(30) Priorität: 13.11.2009 DE 102009053071
(43) Veröffentlichungstag der Anmeldung: 18.05.2011
(73) Patentinhaber: Festool GmbH, 73240 Wendlingen (DE)
(72) Erfinder: Reuß, Torsten, 73265 Dettingen (DE)
(74) Vertreter: Bregenzer, Michael

(56) Entgegenhaltungen:
- DE-A1-102007 011 341
- DE-A1-102007 020 518
- DE-U1- 8 024 714
- JP-A- 61 294 254

## Beschreibung

Die Erfindung betrifft eine Führungsvorrichtung für eine zum Bearbeiten eines Werkstücks vorgesehene Hand-Werkzeugmaschine mit einem Führungskörper zum Führen an einer Führungsbasis, mit einem Führung-Verbindungsanordnung zum Verbinden des Führungskörpers mit der Hand-Werkzeugmaschine und mit mindestens einer Koppeleinrichtung zum Koppeln des Führungskörpers und mit der Führung-Verbindungsanordnung mit einer insbesondere einstellbaren Distanz zwischen dem Führungskörper und der Führung-Verbindungsanordnung. Die Erfindung betrifft ferner eine mit einer solchen Führungsvorrichtung ausgestatte Hand-Werkzeugmaschine.

Eine solche Führungsvorrichtung ist beispielsweise aus dem Gebrauchsmuster DE 80 24 714 U1 bekannt. Die Hand-Werkzeugmaschine ist bei der bekannten Führungsvorrichtung eine Stichsäge, an deren Sägetisch die Führungsvorrichtung befestigbar ist. Die Koppeleinrichtung wird von einer Einsteckleiste gebildet, an deren von der Stichsäge abgewandten Ende ein Führungskörper in Gestalt einer Führungsschiene angeordnet ist. Die Führungsschiene kann beispielsweise an einer Seitenkante eines zu bearbeitenden bzw. zu sägenden Werkstückes anliegen und daran entlang gleiten, um die Stichsäge beim Sägen des Werkstückes zu führen. Ferner ist die Führungsvorrichtung mittels einer Zentrierspitze versehen, um Kreisschnitte mit der Stichsäge durchführen zu können.

Die bekannte Führungsvorrichtung ist relativ voluminös und ausladend, was beispielsweise bei Transport störend ist.

Es ist daher die Aufgabe der vorliegenden Erfindung, eine kompakte Führungsvorrichtung für eine zum Bearbeiten eines Werkstücks vorgesehene Hand-Werkzeugmaschine, insbesondere eine Stichsäge bereitzustellen.

Zur Lösung dieser Aufgabe ist eine Führungsvorrichtung nach Anspruch 1 vorgesehen. Die Aufgabe wird ferner durch eine mit der erfindungsgemäßen Führungsvorrichtung ausgestatte Hand-Werkzeugmaschine gelöst. Die Führungsvorrichtung kann fest oder insbesondere werkzeuglos lösbar mit der Hand-Werkzeugmaschine verbunden sein.

Das mindestens eine Spreizband ist biegeflexibel, so dass es beispielsweise aufgerollt werden kann und beim Transport nicht stört. Die Koppeleinrichtung, die man auch als eine Distanzeinrichtung zwischen einerseits der Verbindungsanordnung und somit der Hand-Werkzeugmaschine und andererseits dem Führungskörper bezeichnen könnte, ist dadurch flexibel auf verschiedene Längen einstellbar, was eine große Flexibilität schafft. Auch wenn ein verhältnismäßig langes Spreizband verwendet wird, kann dies zum Transport gerollt und somit platzsparend verstaut werden. In diesem Zusammenhang sei erwähnt, dass selbstverständlich auch zwei und mehr Spreizbänder bei einer erfindungsgemäßen Führungsvorrichtung vorgesehen sein können.

Das mindestens eine Spreizband besteht zweckmäßigerweise aus einem Metallmaterial. Es versteht sich, dass an dem Spreizband auch Verstärkungen vorgesehen sein können, beispielsweise Verdickungen (querverlaufend oder längsverlaufend) oder dergleichen. Eine jeweilige Verstärkung kann auch aus einem anderen Material sein, beispielsweise aus Kunststoff.

Eine erfindungsgemäß genutzte Eigenschaft des Spreizbandes ist es, dass es im ausgezogenen oder ausgefahrenen Zustand, d.h. wenn es eine Distanz zwischen dem Führungskörper und der Hand-Werkzeugmaschine bzw. der darin angeordneten Führung-Verbindungsanordnung herstellt, eine gewisse Biegesteifigkeit aufweist, so dass der Abstand zwischen der Hand-Werkzeugmaschine und dem Führungskörper beibehalten werden kann.

Die Führungsvorrichtung eignet sich insbesondere zur Verwendung im Zusammenhang mit einer Stichsäge. Aber auch die Anordnung an einem sonstigen spanenden und/oder sägenden maschinellen Handwerkwerkzeug ist möglich, beispielsweise an einer Fräse. Auch die Verwendung mit einer Kreissäge ist möglich. Die Führungsvorrichtung kann beispielsweise zur Herstellung gerader Schnitte verwendet werden. Dann ist sie insbesondere als eine Parallel-Führungsvorrichtung ausgestaltet. Bei dieser Ausführungsform ist es bevorzugt, wenn zwei oder mehr Spreizbänder vorgesehen sind. Es versteht sich allerdings, dass die Führungsvorrichtung auch an einer beliebigen vorgabekontur entlang geführt werden kann, so dass die Hand-Werkzeugmaschine korrelierend zu dieser Vorgabekontur beispielsweise Sägeschnitte oder Fräsbahnen am zu bearbeitenden Werkstück anbringt.

An einem oder mehreren der erfindungsgemäß vorgesehenen Spreizbänder zweckmäßigerweise eine Messskala oder eine Maßeinheit angeordnet sein können.

Eine Länge eines sich zwischen der Führung-Verbindungsanordnung und dem Führungskörper erstreckenden Abschnitts des einen Spreizbands oder mehrerer Spreizbänder ist zweckmäßigerweise einstellbar. Mittels einer und/oder mehrerer Halteeinrichtungen können eines und/oder mehrere Spreizbänder in seiner jeweiligen Länge festgelegt werden. Die Halteeinrichtung kann beispielsweise eine Verrastung, ein Einhängen oder dergleichen des Spreizbandes an einer Haltebasis umfassen, beispielsweise am Führungskörper oder auch an der Führung-Verbindungsanordnung. Besonders bevorzugt ist jedoch eine Klemmeinrichtung mit einem Klemmkörper, der das Spreizband gegen ein Widerlager, beispielsweise einen Grundkörper des Führungskörpers, klemmt. Bevorzugt ist es dabei, wenn der Klemmkörper im Wesentlichen flächig klemmt. Es ist auch möglich, dass der Führungskörper und/oder das Widerlager eine gewölbte oder bogenförmige Kontur aufweist, korrelierend zu der zweckmäßigerweise ebenfalls gewölbten oder bogenförmigen Querschnittskontur des Spreizbandes.

Die Klemmeinrichtung weist zweckmäßigerweise ein Keilgetriebe zum Betätigen des Klemmkörpers auf. Das Keilgetriebe wird vorteilhaft durch eine Schraube verstellt.

Die Halteeinrichtung ist zweckmäßigerweise an dem Führungskörper angeordnet. Eine lösbare Anordnung der Halteeinrichtung ist bevorzugt. Dabei ist es vorteilhaft, wenn die Halteeinrichtung werkzeuglos von dem Führungskörper lösbar ist. Bei alle vorgenannten Maßnahmen ist es nämlich vorteilhaft, dass an der Hand-Werkzeugmaschine kein Platz für die Halteeinrichtung zum Halten des Spreizbandes erforderlich ist.

Zwar könnte ein vor den Führungskörper oder die Führung-Verbindungsanordnung vorstehender nicht benötigter Abschnitt des Spreizbandes beispielsweise von Hand aufgewickelt werden, so dass er keinen oder nur wenig Platz benötigt. Wenn es nicht stört, könnte dieser nicht benötigte Abschnitt des Spreizbandes auch ohne weiteres in seinem unaufgewickelten Zustand verbleiben. Bevorzugt ist es allerdings, wenn die erfindungsgemäße Führungsvorrichtung eine Wickeleinrichtung zum Aufwickeln des Spreizbandes auf einen Bandwickel aufweist. Es versteht sich, dass bei mehreren Spreizbändern vorzugsweise für jedes Spreizband eine Wickeleinrichtung vorgesehen ist oder die Führungsvorrichtung eine solche Wickeleinrichtung aufweist, die mehrere Spreizbänder aufwickeln kann.

Insoweit das Spreizband beispielsweise eine Tendenz zum "Sich-Selbst-Aufwickeln" aufweist, bildet das Spreizband sozusagen selbst eine Wickeleinrichtung oder einen Bestandteil derselben.

Bei der Wickeleinrichtung ist es vorteilhaft, wenn sie eine Bandwickelaufnahme zur Aufnahme des Bandwickelns aufweist. Auch eine Wickelführung zur Führung des Spreizbandes beim Aufwickeln des Bandwickels ist vorteilhaft. Die Bandwickelaufnahme umfasst zweckmäßigerweise ein Gehäuse. Das Gehäuse ist beispielsweise dosenartig oder durch eine Dose gebildet. Es versteht sich, dass die Bandwickelaufnahme auch als Wickelführung dienen kann oder eine Wickelführung umfassen kann. Die Wickelführung umfasst beispielsweise eine oder mehrere Führungskulissen, Vorsprünge, Führungsaufnahmen, einen Führungskäfig oder dergleichen.

Die Bandwickelaufnahme und/oder die Wickelführung führen das Spreizband beispielsweise
- quer zur Wickelachse des Bandwickels,
- entgegengesetzt zu einem freien Ende des Spreizbandes
- bezüglich des Bandwickels radial außen.

Es versteht sich, dass diese vorgenannten Führungsmaßnahmen auch in Kombination miteinander vorgesehen sein können.

Das Spreizband weist zweckmäßigerweise eine Vorspannung mit einer Tendenz zu einem selbsttätigen Abwickeln von dem Bandwickel auf. Wenn das Spreizband also unbelastet ist, neigt es dazu, sich selbst von dem Bandwickel abzuwickeln und dadurch eine Distanz zwischen der Führung-Verbindungsanordnung und dem Führungskörper herzustellen. Ein Bediener drückt also das Spreizband in Richtung des Bandwickels, um es aufzuwickeln.

Es versteht sich, dass die Wickeleinrichtung auch eine Federbetätigung aufweisen kann, derart, dass die Feder beim Abwickeln des Bandwickels gespannt wird und in umgekehrter Richtung, d.h. beim Loslassen oder Freigeben des Spreizbandes, das Spreizband aufwickelt.

Eine Eigenschaft des Spreizbandes ist es, dass es im abgewickelten Zustand gewölbt ist und somit Druckkräfte übertragen kann. Beim Aufwickeln jedoch kann das Spreizband flach liegen oder zumindest weniger gewölbt sein. Dadurch kann das Spreizband platzsparend auf die Aufwickelspule aufgewickelt werden. Die Funktion des Spreizbandes geht im Wesentlichen auf eine elastische Deformation zurück. Man kennt dieses Prinzip beispielsweise von Metallmaßbändern. Das Spreizband ist relativ zugsteif und zumindest in seiner Längsrichtung weist es eine Drucksteifigkeit auf.

Das Spreizband hat eine Wölbung quer zu seiner Längserstreckungsrichtung. Diese Wölbung verläuft zweckmäßigerweise derart, dass beim Gebrauch der Führungsvorrichtung bei einem Aufliegen derselben auf einem Untergrund ein zwischen freien Längsseiten des mindestens einen Spreizband angeordneter mittlerer Abschnitt der Wölbung einen größeren Abstand zu dem Untergrund aufweist als die freien Längsseiten. Mithin ist also das Spreizband sozusagen mit seinem mittleren Abschnitt von dem Untergrund weg gewölbt. Die Längsseiten können bei Gebrauch der Führungsvorrichtung beispielsweise auf dem Untergrund aufliegen, zum Beispiel auf dem mit der Hand-Werkzeugmaschine zu bearbeitenden Werkstück.

Die Koppeleinrichtung könnte neben dem mindestens einen Spreizband auch ein festes Distanzstück, beispielsweise einen Distanzstab aufweisen, der zwischen dem Führungskörper und der Führung-Verbindungsanordnung, d.h. der Hand-Werkzeugmaschine bei Gebrauch der Führungsvorrichtung, verläuft bzw. sich dazwischen erstreckt. Bevorzugt ist dies jedoch, wenn die Koppeleinrichtung sozusagen immer flexibel bleibt und platzsparend bei Nichtgebrauch verstaut werden kann. Dazu weist die Koppeleinrichtung beispielsweise mindestens zwei in einem Abstand zueinander angeordnete Spreizbänder auf. Die jeweiligen Unterseiten der Spreizbänder, die beispielsweise einen Untergrund zugeordnet sind, bzw. auf diesem möglicherweise auch bei Gebrauch der Führungsvorrichtung aufliegen, liegen zweckmäßigerweise im Wesentlichen in einer Ebene.

Die zwei oder mehr Spreizbänder verlaufen zweckmäßigerweise im Wesentlichen parallel zueinander.

Ein Abstand der Spreizbänder im Bereich der Hand-Werkzeugmaschine entspricht vorzugsweise etwa der Länge eines Führungstisches oder eines sonstigen Führungsbauteiles der Hand-Werkzeugmaschine.

Mit dem Führungstisch gleitet die Hand-Werkzeugmaschine zweckmäßigerweise auf dem Untergrund, insbesondere dem Werkstück, beim Bearbeiten des Werkstückes entlang.

Der Führungskörper kann verschiedenartig ausgestaltet sein, so dass er an die jeweilige Führungsaufgabe optimal angepasst ist. Es versteht sich, dass die Führungsvorrichtung auch mehrere, zweckmäßigerweise auswechselbare Führungskörper und/oder mindestens einen bewegliche Führungselemente aufweisenden Führungskörper aufweisen kann. Somit ist eine Anpassung der Führungsvorrichtung an die jeweilige Führungsaufgabe ohne weiteres möglich.

Beispielsweise weist der Führungskörper eine Anlagekontur zum Anlegen an die Führungsbasis auf. Diese Anlagekontur kann beispielsweise einen oder mehrere Winkel umfassen. Es ist aber auch möglich, dass der Führungskörper eine Gleitkontur aufweist, die zu einer Führungsschiene passt, die auf das Werkstück auflegbar ist. Beispielsweise kann die Gleitkontur Führungsaufnahmen und Vorsprünge aufweisen, die zu korrespondierenden Führungsvorsprüngen und -aufnahmen der Führungsschiene passen. Die Anlagekontur und/oder die Gleitkontur eignet sich beispielsweise zur Herstellung von Parallelschnitten. Zur Herstellen von Kreisschnitten ist es hingegen vorteilhaft, wenn der Führungskörper einen Dorn zum Eindringen in die Führungsbasis aufweist.

Selbstverständlich können die Anlagekontur, die Gleitkontur oder der Dorn feststehend an dem Führungskörper angeordnet sein. Dieser ist bezüglich des mindestens eines Spreizbandes und/oder der Wickeleinrichtung wie erläutert vorzugsweise austauschbar oder auswechselbar. Dabei ist es vorteilhaft, wenn dieses Auswechseln werkzeuglos geschehen kann, beispielsweise durch Lösen oder Schließen von Rastverbindungen, Schraubverbindungen mit Rändelschraube oder dergleichen.

Die Anlagekontur und/oder die Gleitkontur und/oder der Dorn sind vorteilhaft zwischen einer zur Führung an der Führungsbasis vorgesehenen Gebrauchsstellung und einer Nichtgebrauchsstellung beweglich an einem Grundkörper des Führungskörpers gelagert. Es ist also auch möglich, einen variablen bzw. an die jeweiligen Erfordernisse anpassbaren Führungskörper vorzusehen. Beispielsweise könnte die Anlagekontur beweglich an einem Grundkörper des Führungskörpers gelagert sein, um sie zwischen einer zur Führung an der Führungsbasis vorgesehenen Gebrauchsstellung und einer Nichtgebrauchsstellung zu verstellen. Auch die Gleitkontur könnte verstellbar sein, beispielsweise könnte man Führungsvorsprünge zurück verstellen, so dass sie nicht mehr vor den Grundkörper vorstehen. Auch der vorgenannte Dorn kann beweglich am Grundkörper angeordnet sein, so dass er beispielsweise in eine vor den Grundkörper vorstehende, zum Eindringen in die Führungsbasis vorgesehene Stellung und einer Nichtgebrauchsstellung verstellbar ist, in der er nicht vor dem Grundkörper vorsteht.

Die Führung-Verbindungsanordnung ist zweckmäßigerweise mit der Hand-Werkzeugmaschine in mindestens zwei unterschiedlichen Stellungen verbindbar. In diesen unterschiedlichen Stellungen steht das mindestens eine Spreizband oder steht die Koppeleinrichtung von verschiedenen, beispielsweise über Eck angeordneten Seiten der Hand-Werkzeugmaschine ab, so dass die Führung-Verbindungsanordnung die Hand-Werkzeugmaschine von verschiedenen Seiten herzuführen vermag. Es ist aber auch vorteilhaft, wenn die Koppeleinrichtung bzw. das Spreizband von einander entgegengesetzten der Hand-Werkzeugmaschine her abstehend an dieser, beispielsweise deren Führungstisch anordenbar sind. Dabei ist es besonders bevorzugt, wenn das Spreizband symmetrisch voneinander entgegengesetzten Seiten der Handwerkzeugmaschine abstehend an derselben angebracht werden kann. Eine auf Seiten der Hand-Werkzeugmaschine vorgesehene Maschinen-Verbindungsanordnung ist zweckmäßigerweise korrespondierend dazu ausgestaltet. Diese kann beispielsweise Schraubaufnahmen, Steckaufnahmen oder Vorsprünge oder dergleichen mehr umfassen. Bei der symmetrischen Anordnung hat es sich als vorteilhaft herausgestellt, dass eine an dem Spreizband angeordnete Messskala sozusagen beidseits gültig ist oder dieselben richtigen Werte anzeigt.

Zwar ist es möglich, dass die Führung-Verbindungsanordnung fest an der Hand-Werkzeugmaschine angeordnet ist, beispielsweise in Gestalt einer Halterung oder Aufnahme für das mindestens eine Spreizband, einer Klemmplatte für das Spreizband oder dergleichen. Bevorzugt ist es jedoch, wenn die Führung-Verbindungsanordnung insbesondere werkzeuglos lösbar mit der Hand-Werkzeugmaschine verbindbar ist. Bei Nichtgebrauch kann also die Führungsvorrichtung ohne ein Werkzeug von der Hand-Werkzeugmaschine gelöst und von dieser entfernt werden.

Bevorzugt ist es, wenn die Führungs-Verbindungsanordnung zu einer schubfesten und/oder zugfesten Verbindung der Führungsvorrichtung mit der Hand-Werkzeugmaschine bezüglich einer Längserstreckungsrichtung des mindestens einen Spreizbandes ausgestaltet ist. Dadurch entsteht eine schubfeste oder zugfeste Verbindung zwischen einerseits der Führungsbasis und andererseits der Hand-Werkzeugmaschine. Aber auch quer zur Längserstreckungsrichtung des mindestens einen Spreizbandes ist ein fester Halt der Führungs-Verbindungsanordnung mit der Hand-Werkzeugmaschine zweckmäßig.

Ein Klemmen des mindestens einen Spreizbands an der Hand-Werkzeugmaschine, ein Verschrauben oder dergleichen sind möglich. Jedenfalls sind die Hand-Werkzeugmaschine und die Führung-Verbindungsanordnung zweckmäßigerweise formschlüssig miteinander verbunden.

Die Führung-Verbindungsanordnung weist jedoch vorzugsweise eine Führung-Steckanordnung mit einer Steckaufnahme und/oder einem Steckvorsprung auf. Dabei ist eine schwalbenschwanzförmige Konfiguration vorteilhaft. Mit der Führung-Steckanordnung kann die Führungsvorrichtung an eine Maschinen-Steckanordnung der Hand-Werkzeugmaschine angesteckt werden.

Bei der Maschinen-Steckanordnung ist es vorteilhaft, wenn sie eine Übergreiffläche aufweist, die mit einer Kraftrichtung zu einem zu bearbeitenden Untergrund hin auf die Führungs-Verbindungsanordnung wirkt. Beispielsweise greift die Maschinen-Steckanordnung in die Führung-Verbindungsanordnung ein, insbesondere von oben (bei horizontalem Betrieb der Hand-Werkzeugmaschine). Die Führung-Steckanordnung weist zweckmäßigerweise eine Aufnahme auf, die an einer zu dem Untergrund entgegengesetzten Seite hin offen ist. Von dort greift beispielsweise ein Steckvorsprung an der Hand-Werkzeugmaschine ein, die beispielsweise an einem Führungstisch oder Sägetisch angeordnet ist. Somit hält die Maschinen-Steckanordnung die Steckverbindung zur Führung-Verbindungsanordnung sozusagen von selbst bzw. sorgt dafür, dass die Steckverbindung sich nicht unbeabsichtigt löst.

Es versteht sich, dass auch ein Verrasten der Hand-Werkzeugmaschine und der Führungsvorrichtung vorteilhaft ist.

Nachfolgend werden Ausführungsbeispiele der Erfindung anhand der Zeichnung erläutert. Es zeigen:
- Figur 1: eine perspektivische Schrägansicht einer mit einer erfindungsgemäßen Führungsvorrichtung ausgestatte- ten Hand-Werkzeugmaschine zum Ausführen von Kreis- schnitten,
- Figur 2: eine perspektivische Schrägansicht eines Führungs- körpers sowie einer Klemmeinrichtung der Führungs- vorrichtung gemäß Figur 1,
- Figur 3: eine perspektivische Schrägansicht einer Führungs- vorrichtung gemäß der Erfindung mit zwei Spreizbän- dern zum Ausführen von Parallelschnitten in an der Hand-Werkzeugmaschine gemäß Figur 1 angebrachtem Zustand,
- Figur 4: die Führungsvorrichtung gemäß Figur 3 von hinten, jedoch nur mit dem Sägetisch der Hand- Werkzeugmaschine,
- Figur 5: eine Führungsvorrichtung zur Ausführung von Paral- lelschnitten, jedoch mit nur einem Spreizband in Verbindung mit einer Hand-Werkzeugmaschine und
- Figur 6: die Führungsvorrichtung gemäß Figur 5, jedoch hin- ten am Sägetisch der Hand-Werkzeugmaschine angeord- net.

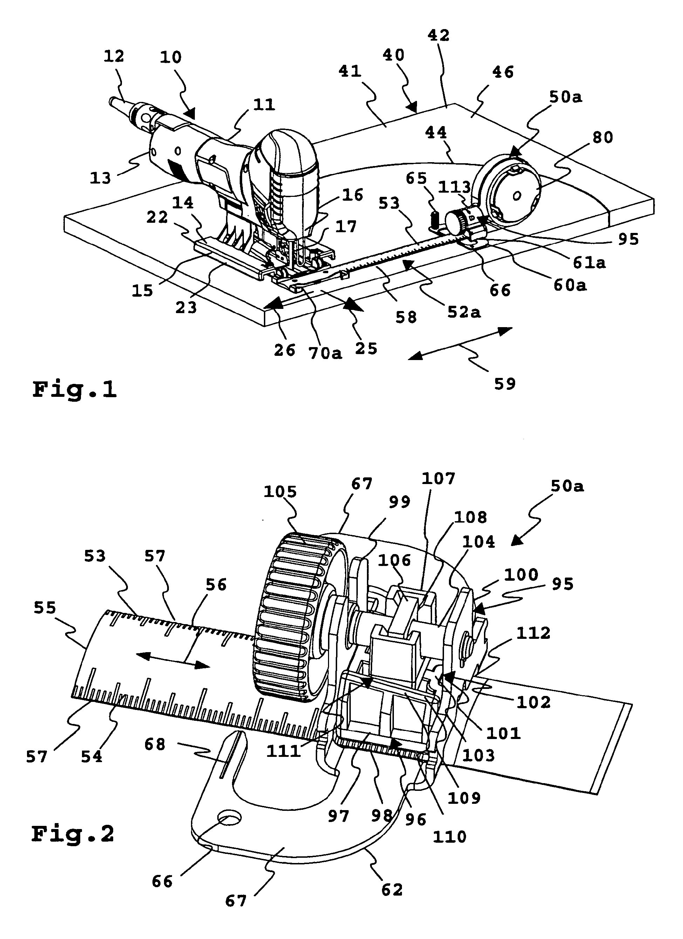

Bei einer in den Figuren 1, 3 und 5 dargestellten Hand-Werkzeugmaschine 10 handelt es sich beispielshaft für andere Hand-Werkzeugmaschinen, beispielsweise Kreissägen, Fräsgeräte oder dergleichen, um eine Stichsäge 11. Die Stichsäge 11 ist vorliegend ein Elektro-Handwerkzeug, wobei die Erfindung in Zusammenhang mit beispielsweise pneumatischen Werkzeugen oder andersartig angetriebenen Werkzeugen ohne weiteres realisierbar ist. Die Stichsäge 11 wird über ein Kabel 12 mit elektrischer Energie versorgt, das ansatzweise dargestellt ist. Es versteht sich, dass die Erfindung auch mit schnurlosen oder kabellosen Elektro-Handwerkzeugmaschinen verwendet werden kann, die eine eigene Energieversorgung, beispielsweise einen Batteriepack oder Akkupack an Bord haben. An der Unterseite eines Gehäuses 13 der Hand-Werkzeugmaschine 10 ist eine Werkstückführung 14 in Gestalt eines Sägetisches 15 angeordnet. Der Sägetisch 15 steht beispielhaft für eine FührungsAnordnung, mit der eine erfindungsgemäße Hand-Werkzeugmaschine an und/oder auf einem Werkstück 40 entlang geführt werden kann.

Ein Sägeblatt 17, das durch einen im Gehäuse 13 angeordneten, in der Zeichnung nicht sichtbaren Motor angetrieben wird, steht durch eine Ausnehmung 18 an einer Vorderseite 19 des Sägetisches 15 nach unten vor demselben vor, um das Werkstück 40 zu sägen. Der Sägetisch 15 ist zum Aufsetzen oder Auflegen auf das Werkstück 40 vorgesehen und leitet mit seiner Unterseite 20, die somit eine Führungsfläche 21 einer Werkstückführung 14 bildet, auf einer Oberseite 41 des Werkstücks 40 entlang.

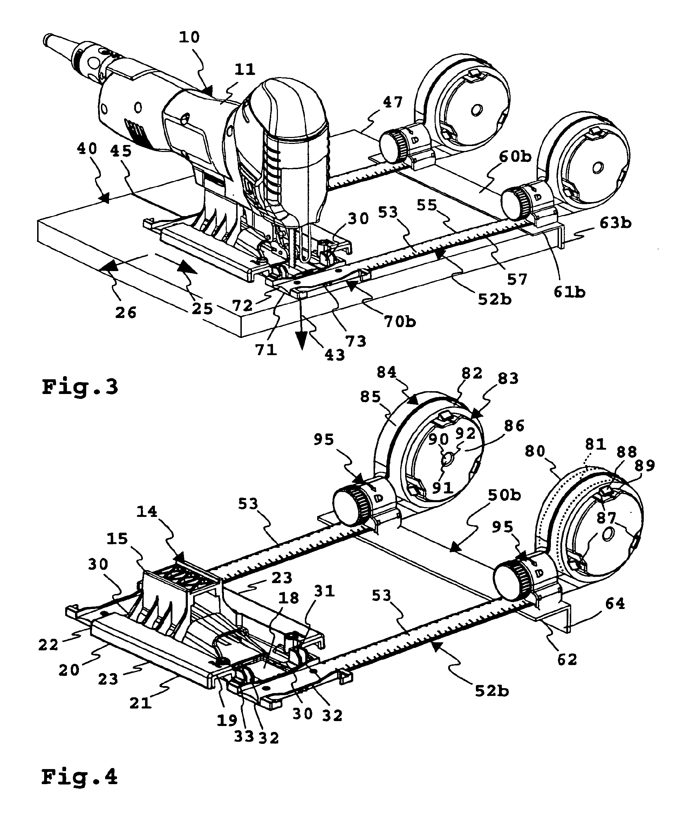

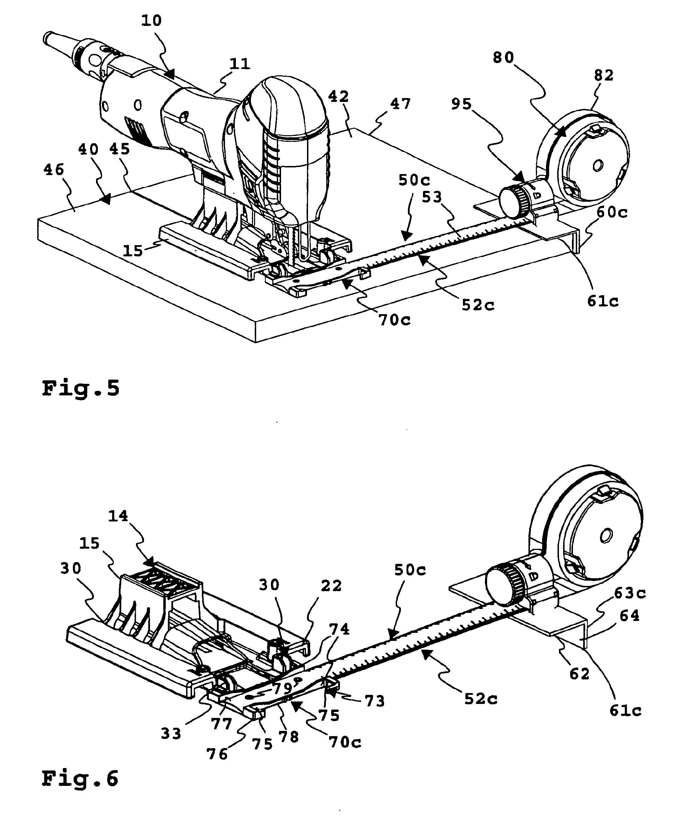

In an sich bekannter Weise können mit der Stichsäge 11 Sägeschnitte mit recht beliebigem Verlauf in das Werkstück 40 eingesägt werden. Sind jedoch gerade oder kreisförmige Sägeschnitte gewünscht, d.h. exakte Sägeschnitte mit einem definierten Verlauf, benötigt ein Bediener Hilfsmittel. Hierzu stehen ihm die nachfolgend beschriebenen Führungsvorrichtungen 50a (Figuren 1, 2), 50 b (Figuren 3, 4) sowie 50c (Figuren 5, 6) zur Verfügung. Gleiche oder gleichartige Bauteile sind nachfolgend mit denselben Bezugszeichen versehen. Soweit Unterschiede vorhanden sind, sind bei der Führungsvorrichtungen 50a, 50b und 50c die Kleinbuchstaben a, b, c verwendet.

Die Führungsvorrichtungen 50a-50c dienen Koppeleinrichtungen 52a-52b und 52c zum Verbinden von Führungskörpern 60a-60b und 60c mit Führung-Verbindungsanordnungen 70a, 70b, 70c, die wiederum mit der Hand-Werkzeugmaschine 10 lösbar verbindbar sind, nämlich mit deren Maschinen-Verbindungsanordnung 30. Die lösbaren Verbindungen zwischen den Verbindungsanordnungen 30 und 70a - 70c sind Steckverbindungen, die einfach lösbar und wieder herstellbar sind.

Dabei ist eine Führung-Steckanordnung 73 der jeweiligen Führung-Verbindungsanordnung 70a-70c an eine Maschinen-Steckanordnung 31 der Verbindungsanordnung 30 ansteckbar ist. Die Maschinen-Verbindungsanordnung 30 ist an der Werkstückführung 14 vorgesehen. An der Vorderseite 19 des Sägetisches 15 sowie an dessen der Vorderseite 19 entgegengesetzten Rückseite 22 ist jeweils eine Maschinen-Steckanordnung 31 vorgesehen. Somit kann also eine jeweilige Führung-Verbindungsanordnung 70a-70c sowohl vorn als auch hinten am Sägetisch 15 lösbar befestigt werden, was eine hohe Flexibilität darstellt. Unter anderem erhöht sich dadurch die Anzahl von Sägeschnitt-Geometrien, die mit einer jeweiligen Führungsvorrichtung 50a oder 50c herstellbar ist. Weiterhin erhöht sich auch die Führungsqualität dahingehend, dass mehrere Führungs-Verbindungsanordnungen 70a-70c an der erfindungsgemäßen Hand-Werkzeugmaschine 10 befestigbar sind, was beispielsweise bei der Führungsvorrichtung 50b der Fall ist.

In diesem Zusammenhang sei erwähnt, dass selbstverständlich auch weitere Verbindungsmöglichkeiten zwischen einerseits einer erfindungsgemäßen Hand-Werkzeugmaschine und andererseits einer erfindungsgemäßen Führungsvorrichtung denkbar sind. So könnte beispielsweise eine Verbindung zwischen einer Führungsvorrichtung und der Hand-Werkzeugmaschine 10 an den sich zwischen der Vorderseite 19 und der Rückseite 22 erstreckenden Seiten des Sägetisches 15 vorgesehen sein.

Die vorzugsweise an der Vorderseite 19 und der Rückseite 22 des Sägetisches 15 vorhandenen, zweckmäßigerweise konturgleichen Maschinen-Steckanordnungen 31 weisen jeweils zwei zueinander beabstandete Steckvorsprünge 32 auf, die z.B. von oben her, d.h. in einer zum Werkstück 40 und somit zu einem Untergrund 42 gerichteten Steck- oder Kraftrichtung 43, in Steckaufnahmen 74 der Führung-Steckanordnung 73 eingreifen.

Die an der Vorderseite 19 des Sägetisches 15 vorhandenen Steckvorsprünge 32 sind an einander entgegensetzten Seiten des Sägeblattes 17 angeordnet und weisen Einstecknasen 33 auf, die zu Längsseiten 23 hin gerichtet sind, die sich zwischen der Vorderseite 19 und der Rückseite 22 des Sägetisches 15 erstrecken. Mithin haben die Steckvorsprünge 32 also eine L-förmige Gestalt, wobei die freien Schenkel der Steckvorsprünge 32 zu den Längsseiten 23 hin gerichtet sind. Diese freien Schenkel bzw. Einstecknasen 33 greifen in U-förmige Aufnahmen 75 der Steckaufnahmen 74 ein, so dass insgesamt ein formschlüssiger Halt der Steckanordnungen 73, 31 aneinander gegeben ist.

Beim Ausführungsbeispiel ist eine jeweilige Steckaufnahme 74 oben und unten offen, so dass die Führung-verbindungsanordnung 70a-70c, sowohl von oben her auf die Maschinen-Steckanordnung 31 aufsteckbar ist, als auch umgekehrt die Maschinen-Steckanordnung 31 von oben her auf die Führung-Steckanordnung 73 aufsteckbar ist, was das Auswechseln jeweils erleichtert.

Es versteht sich, dass alternativ (in der Zeichnung nicht dargestellt) auch teilweise geschlossene Steckaufnahmen möglich sind, so dass beispielsweise eine Unterseite der Steckvorsprünge 32 eine Übergreiffläche bildet, die auf einer entsprechenden Bodenfläche einer jeweiligen Steckaufnahme der Führung-Steckanordnung aufliegt und diese in einer zu dem beispielsweise durch das Werkstück 40 gebildeten Untergrund 42 gerichteten Kraftrichtung 43 belastet. Wenn also dann der Sägetisch 15 auf dem Untergrund 42 aufliegt und dort geführt ist, drückt er sozusagen die Steckvorsprünge 32 in die bodenseitig geschlossenen Steckaufnahmen der jeweiligen Führungs-Steckaufnahme.

Die Steckaufnahmen 74 der Führung-Verbindungsanordnungen 70a-70c sind an Verbindungsplatten 71 angeordnet. Die Verbindungsplatten 71 weisen jeweils eine Spreizbandaufnahme 72 für ein Spreizband 53 einer der Koppeleinrichtungen 52a-52c auf. Beidseits einer jeweiligen Spreizbandaufnahme 72, d.h. an Längsseiten 76 der Verbindungsplatte 71 ist jeweils eine Steckaufnahme 74 angeordnet, die eine formschlüssig zu den Steckvorsprüngen 32 passende Innenkontur aufweist. Die Steckaufnahmen 74 (es könnten auch Steckvorsprünge vorgesehen sein) sind vorteilhaft spiegelsymmetrisch bezüglich einer Mittelachse und/oder punktsymmetrisch bezüglich eines Mittelpunkts eines erfindungsgemäßen Verbindungselements, hier der Verbindungsplatte 71. Durch die an einander entgegengesetzten Seiten vorgesehenen Steckkonturen kann eine Verbindungsplatte 71 sowohl in einer ersten, in der Zeichnung dargestellten Stellung als auch entgegengesetzt dazu, d.h. mit der in der Zeichnung unbenutzten Steckaufnahme 74 mit dem Sägetisch 15 verbunden werden.

Wie gesagt, ist dieser Wechsel besonders einfach zu bewerkstelligen, da die Steckaufnahmen 74 oben und unten, d.h. zu einer Oberseite 77 und einer Unterseite 78 der Verbindungsplatte 71 hin jeweils offen sind. Wenn die Führung-Steckanordnung 73 an die Maschinen-Steckanordnung 31 angesteckt ist, ist ein formschlüssiger, fester Halt gegeben, so dass die jeweilige Führung-Verbindungsanordnung 70a bezüglich Kraftrichtungen fest miteinander verbunden sind, die im Wesentlichen parallel zum Untergrund 42 verlaufen, beispielsweise in einer Längsrichtung 25 und einer Querrichtung 26. Die Querrichtung 26 verläuft beispielsweise im Wesentlichen parallel zu den Längsseiten 76, während die Längsrichtung 25 winkelig dazu, insbesondere rechtwinkelig dazu ist.

Die Führungsvorrichtungen 50a und 50c weisen jeweils ein Spreizband 53 auf, das mit einer Führung-Verbindungsanordnung 70a, 70c wahlweise vorn und hinten sowie wahlweise zur einen oder zur anderen Längsseite 23 abstehend an der Werkstückführung 14 lösbar befestigbar sind.

In diesem Zusammenhang sei erwähnt, dass eine Kopplung einer erfindungsgemäßen Führungsvorrichtung mit einer Hand-Werkzeugmaschine zweckmäßigerweise im Bereich einer Führungsfläche oder nahe dabei, beispielsweise vorliegend nahe bei der Unterseite 20 des Sägetisches 15, der Hand-Werkzeugmaschine 10 erfolgt. Auch ein jeweiliges Spreizband sollte vorteilhaft in der Nähe dieser Führungsfläche verlaufen, vorliegend beispielsweise auf oder knapp oberhalb des Untergrundes 42.

Dies ist bei den Ausführungsbeispielen dadurch realisiert, dass die Unterseiten der Verbindungsplatten 71 etwa mit der Unterseite 20 des Sägetisches 15 fluchten bzw. in einer Ebene liegen. Das Spreizband 53 ist jeweils knapp oberhalb der Unterseite 78 angeordnet. Die Verbindungsplatten haben nämlich im Wesentlichen U-förmige Spreizbandaufnahmen 72 zur Aufnahme eines jeweiligen Spreizbandes 53. Die Spreizbandaufnahme 72 verläuft zwischen den Längsseiten 76 und erstreckt sich über eine gesamte Länge einer jeweiligen Verbindungsplatte 71. Weiterhin hat die Spreizbandaufnahme 72 eine Wölbung, die mit einer Wölbung 55 des Spreizbandes 53 korrespondiert. Dadurch wird also die Wölbung 55 des Spreizbandes 53 auch im Bereich einer Verbindungsplatte 71 aufrechterhalten. Das Spreizband 53 ist zweckmäßigerweise formschlüssig oder zumindest im Wesentlichen formschlüssig in einer jeweiligen Steckaufnahme 74 aufgenommen.

Nun könnte man das Spreizband 53 beispielsweise verkleben, verschweißen oder in sonstiger Weise mit der Führung-Verbindungsanordnung 70a-70c verbinden. Bei den Ausführungsbeispielen ist jedoch eine Nietverbindung gewählt, d.h. die Spreizbänder 53 sind mit den Verbindungsplatten 71 mittels Nieten 79 verbunden, die die Spreizbänder 53 und die Verbindungsplatten 71 durchdringen.

Es versteht sich, dass auch eine lösbare Verbindung von Spreizbändern und Führung-Verbindungsanordnungen möglich ist, beispielsweise mittels Schrauben, Klemmeinrichtungen, Verrastung oder dergleichen. Somit könnte man wahlweise unterschiedlich lange und/oder breite Spreizbänder mit einer jeweiligen Führung-Verbindungsanordnung verbinden.

Die Wölbung 55 eines Spreizbandes 53 verläuft quer zu seiner Längserstreckungsrichtung 56 derart, dass freie Längsseiten 57 des Spreizbandes 53 näher beim Untergrund 42 sind als ein mittlerer Abschnitt der Wölbung 55. Diese Maßnahme trägt zu einer Steifigkeit und Formstabilität einer jeweiligen Führungsvorrichtung 50a-50c dadurch bei, dass ein freier Abschnitt 58 eines Spreizbandes 53, der sich zwischen Führungskörpern 60a-60c und der Führung-Verbindungsanordnung 70a-70c erstreckt und bis zum Untergrund 42 "durchhängt", sich mit zwei freien Längsseiten 57, die zueinander beabstandet sind, abstützen kann. Dadurch wird die Wölbung 55 besser aufrecht erhalten. Zudem ist eine bessere Abstützung auf dem Untergrund 42 vorhanden als bei einer umgekehrten Konfiguration, d.h. wenn ein mittlerer Abschnitt einer Wölbung eines Spreizbandes näher beim Untergrund wäre als die freien Längsseiten des Spreizbandes.

Die Führungsvorrichtung 50a ist zur Herstellung eines kreisförmigen Sägeschnittes 44 vorgesehen, während ein gerader, linear verlaufender Sägeschnitt 45 mit einer der beiden Führungsvorrichtungen 50b, 50c herstellbar ist. Dementsprechend unterschiedlich sind die Führungskörper 60a, 60b und 60c ausgestaltet.

Die Führungskörper 60a-60c haben zwar jeweils ein Auflageelement 61a-61c, das mit seiner Auflageseite 62 auf dem Untergrund 42 aufliegt. Während jedoch das Auflageelement 61a frei auf dem Untergrund 42 verschoben werden kann, d.h. flächig auf demselben aufliegt, sind die Auflageelemente 61b, 61c mit einem Anlageschenkel 63b, 63c ausgestattet, der zusammen mit der Auflageseite 62 eine winkelige Anlagekontur 64 bildet. Die Führungskörper 60b, 60c sind zur seitlichen Anlage von einer Führungsbasis 46 vorgesehen, die vorliegend durch das Werkstück 40 selbst gebildet wird. Mithin liegt also der Anlageschenkel 63b, 63c an einer Seitenfläche 47 des Werkstücks 40 an. Es versteht sich, dass anstelle des Werkstücks 40 auch ein separates Führungselement, beispielsweise eine Führungsschiene oder dergleichen vorgesehen sein könnte, die man auf das Werkstück 40 auflegt. Dementsprechend wäre dann ein etwas anders ausgestalteter Führungskörper vorteilhaft, der eine Eingreifkontur oder Gleitkontur passend zu der Führungsschiene aufweisen kann.

Der Führungskörper 60a weist einen Dorn 65 auf, der wahlweise eine von zwei Bohrungen 66 durchdringen kann, die an Armen 67 des Auflageelements 61a vorgesehen sind. Der Dorn 65 kann also durch eine der Bohrungen 66 wahlweise durchgesteckt werden, um in den Untergrund 42 einzudringen. Der Einstechort des Dorns 65 markiert das Kreiszentrum des kreisförmigen Sägeschnittes 44. Das Spreizband 53 verläuft zwischen den beiden Armen 67. Somit ist also an einander entgegengesetzten Seiten des Spreizbandes 53 jeweils eine Bohrung 66 vorhanden. Ein Abstand einer jeweiligen Bohrung 66 von der Längsseite 57 des Spreizbandes 53 entspricht etwa dem Abstand eines Einsägeortes des Sägeblatts 17 in den Untergrund 42. Somit ist es also möglich, die Führungsvorrichtung 50a in zwei einander entgegensetzten Stellungen an der Stichsäge 11 anzubringen, nämlich so, dass das Spreizband 53 einmal von der einen und einmal von der anderen Längsseite 23 absteht.

Die Anlageschenkel 63b, 63c definieren die Anlagekontur 64 rechtwinkelig. Es versteht sich, dass bewegliche Anlageschenkel möglich sind, beispielsweise derart, dass sie bezüglich des Auflageelementes schwenkbar sind und/oder von diesem entfernbar. Wenn dann dieses Auflageelement noch einen Dorn oder eine Bohrung für einen Dorn aufweist, wäre der Führungskörper sowohl für eine Kreisführung als auch für eine Parallelführung geeignet.

Eine Distanz zwischen dem Führungskörper 60a-60c und der Hand-Werkzeugmaschine 10, d.h. der Führung-Verbindungsanordnung 70a-70c, ist aufgrund der flexiblen längenverstellbaren Spreizbänder 53 einfach herstellbar. Der jeweils nicht benötigte Abschnitt eines Spreizbandes 53 ist in einer Wickeleinrichtung 80 aufgenommen. Mit Hilfe der Wickeleinrichtungen 80 (jedem der Spreizbänder 53 ist eine Wickeleinrichtung 80 zugeordnet) sind die nicht benötigten Abschnitte der Spreizbänder 53 zu einem Bandwickel 81 aufwickelbar. Die erste Windung dieses Bandwickels 81 (schematisch in Figur 4) ist eine feststehende Wicklung, d.h. das jeweilige Spreizband 53 ist dazu beispielsweise eine erste Wicklung bildend vernietet. Die Wickeleinrichtungen 80 sind vorliegend gleichartig ausgestaltet:
Das Spreizband 53 ist in ein Gehäuse 82 einführbar, das eine dosenartige Gestalt aufweist. Das Gehäuse 82 bildet eine Bandwickelaufnahme 83 zur Aufnahme des Bandwickels 81. Zudem führt das Gehäuse 82 das Spreizband 53 beim Aufwickeln und bildet insofern eine wickelführung 84. Beispielsweise gleitet das Spreizband 53 beim Einschieben in das Gehäuse 82 an dessen Umfangswand 85 innenseitig entlang und wird durch die zylindrische Umfangswand 85 sozusagen in eine Kreisbahn, den Bandwickel 81 bildend geführt.

In einem von der Umfangswand 85 begrenzten Innenraum ist ein Kern 86 eingesetzt, der sich im Zentrum des Bandwickels 81 befindet. Während die Umfangswand 85 den Bandwickel 81 radial führt, sind zur axialen Führung des Bandwickels 81 Führungsvorsprünge 88 vorgesehen, die von Führungsnasen oder Trägern 87 nach radial außen, d.h. zur Umfangswand 85 hin vorstehen. Die Führungsvorsprünge 88 sind dabei vorzugsweise so ausgestaltet, dass sie stets bis zur Stirnseite der Umfangswand 85 reichen und jedenfalls den Bandwickel 81 übergreifen, so dass dieser nicht aus dem Zwischenraum 89 zwischen dem Kern 86 und der Umfangswand 85 axial heraus gelangen kann. Die Träger 87 sind radial federnd dergestalt, dass sie nach radial innen nachgeben, wenn ein größerer Anteil des Spreizbandes 53 auf den Bandwickel 81 aufgewickelt ist und dieser somit eine größere Wandstärke aufweist und/oder zum federnden Halt einer ersten Windung des Bandwickels 81. Zweckmäßigerweise sind am Kern 86 im Bereich der Träger 87 Ausnehmungen vorhanden, so dass die Träger 87 nach radial innen federn können. Die Träger 87 können beispielsweise an der Umfangswand 85 oder auch am Kern 86 vorgesehen sein.

Zweckmäßigerweise sind die Umfangswand 85 innenseitig und/oder die dem Bandwickel 81 zugewandten Seiten der Träger 87 gleitfähig derart, dass das Spreizband 53 mit möglichst geringem Widerstand an den entsprechenden Oberflächen entlang gleiten kann.

Eine zweckmäßige Maßnahme ist es jedoch, dass der Kern 86 an einem Lager 90 des Gehäuses 82 drehbar gelagert ist. Beispielsweise steht ein Lagerzapfen 91 von einer Bodenwand (nicht sichtbar) des Gehäuses 82 ab, auf den der Kern 86 mit einer Lageraufnahme 92 aufgesteckt ist, vorzugsweise auch verrastet.

Dies eröffnet eine besonders einfache Montage dergestalt, dass der Kern 86 sozusagen innen in den Bandwickel 81 eingesetzt (die Führungsnasen geben dabei nach) und anschließend in das Gehäuse 82 eingesetzt wird, d.h. in den durch die Umfangswand 85 sowie die nicht sichtbare Bodenwand begrenzten Innenraum.

Vorliegend ist die Vorspannung des jeweiligen Spreizbandes 53 so getroffen, dass dieses eine Tendenz zum selbsttätigen Abrollen vom Bandwickel 81 hat, d.h. dass dieses selbsttätig aus dem Gehäuse 82 austritt. Ein Bediener schiebt also das jeweilige Spreizband 53 in das Gehäuse 82 hinein, um es aufzuwickeln.

Es versteht sich, dass beispielsweise im Kern 86 eine Federanordnung vorgesehen sein könnte, die das Spreizband 53 selbsttätig aufrollt oder abrollt. Eine Federanordnung, beispielsweise eine Spiralfeder mit einer Abrollfunktion könnte beispielsweise das selbsttätige Abrollen des Spreizbandes 53 vom Bandwickel 81 unterstützen.

Zum Halten des Spreizbandes 53 in einer jeweiligen Länge 59 dienen Halteeinrichtungen 95. Jedem Spreizband 53 ist eine Halteeinrichtung 95 zugeordnet. Die Halteeinrichtungen 95 befinden sich an den Führungskörpern 60a-60c und sind den Wickeleinrichtungen 80 in Richtung der Führung-Verbindungsanordnungen 70a - 70c vorgelagert.

Die Länge 59 kann mittels einer Skala 54 an der Oberseite eines jeweiligen Spreizbandes 53 sowie einer zugeordneten Markierung, beispielsweise einer Markierung 68 an den Armen 67, abgelesen werden.

Die Halteeinrichtungen 95 umfassen jeweils eine Klemmeinrichtung 96 mit einem Klemmkörper 97 zum flächigen Klemmen des Spreizbandes 53 gegen ein Widerlager 98, das vorliegend beispielsweise an oder von den Oberseiten der Führungskörper 60a-60c bereitgestellt wird. Vorzugsweise ist das Widerlager 98 korrespondierend mit der Wölbung 55 des Spreizbandes 53 gewölbt, greift also quasi von innen in die Wölbung 55 ein, während der Klemmkörper 97 gegensinnig gewölbt ist, so dass er von oben, die Wölbung 55 zumindest im Wesentlichen erhaltend auf dem Spreizband 53 aufliegt und dieses gegen das Widerlager 98 klemmt.

An den Auflageelementen 61a - 61c sind Lagerschenkel 99, 100 angeordnet, zwischen denen der Klemmkörper 97 gelagert ist. Vorliegend sind die Lagerschenkel 100 zweckmäßigerweise einstückig mit den Führungskörpern 60a-60c. Beispielsweise sind die Lagerschenkel 99, 100 durch einen Stanz-Biege-Prozess gebildet. Die dem Klemmkörper 97 zugewandten Innenseiten sowie die diesen Innenseiten zugewandten Außenseiten des Klemmkörpers 97 sind zweckmäßigerweise Planflächen mit Ausnahme eines Führungsvorsprunges 101 einer Linearführung 102, der in eine Führungsausnehmung 103 eingreift. Der Führungsvorsprung 101 ist am in der Zeichnung rechten Lagerschenkel 100 angeordnet und steht nach innen in die Richtung des Klemmkörpers 97 vor. Somit kann der Klemmkörper zwischen einer von dem Widerlager 98 entfernten Lösestellung, in der das Spreizband 53 entlang seiner Längserstreckungsrichtung 56 axial verstellt werden kann, und einer Klemmstellung zum Klemmen des Spreizbandes 53 gegen das Widerlager 98 linear verstellt werden.

Die Lagerschenkel 99, 100 lagern zudem eine Spannspindel 104 einer Spannschraube, deren Handgriff 105, beispielsweise ein Drehknauf oder ein Rändelgriff, mit der Spannspindel 104 drehfest verbunden ist. Die Spannspindel 104 durchdringt eine Mutter 106, die drehfest mit einem Keilkörper 107 verbunden ist. Dazu sitzt die an ihrem Außenumfang polygonale Mutter 106 in einer sie formschlüssig aufnehmenden Aufnahme 108 des Keilkörpers 107. Durch eine Drehbetätigung der Spannspindel 104 wird der Keilkörper 107 parallel zur Spannspindel 104 verstellt, d.h. zwischen den Lagerschenkeln 99, 100, die bezüglich der Spannspindel 104 Lagerböcke bilden. Dabei gleitet eine Schrägfläche 109 des Keilkörpers 107 an einer Schrägfläche 110 des Klemmkörpers 97 entlang, was zu einer Verstellung des Klemmkörpers 97 in Abhängigkeit der Drehrichtung der Spannspindel 104 in die Klemmstellung oder die Lösestellung führt. Die Schrägflächen 109, 110 bilden insgesamt Bestandteile eines Keilgetriebes 111. Die Schrägflächen 109, 110 haben bei einem der Lagerschenkel 99 oder 100 einen größeren Abstand zum Widerlager 98 als beim anderen Lagerschenkel 100 oder 99.

Es versteht sich, dass auch eine andersartige Spann-, Klemmund/oder Keilgetriebekonfiguration getroffen sein kann. Beispielsweise könnte man sich auch eine Spannschraube vorstellen, die direkt oder unter Zwischenlage eines Auflagestückes von oben auf das Spreizband 53 wirkt, d.h. das die Längsachse einer solchen nicht dargestellten Spannschraube winkelig zur Oberseite des Spreizbandes 53 verläuft.

Weiterhin sind auch Schnellspannmechanismen vorstellbar, die beispielsweise durch manuelles Verschieben eines Klemmkörpers in die Spannstellung oder Klemmstellung gelangen, wo zweckmäßigerweise eine Verrastung vorgesehen ist.

Das Spreizband 53 durchdringt Öffnungen 112 an den Lagerschenkeln 99, 100, die zweckmäßigerweise nahe bei dem jeweiligen Auflageelement 61a-61c angeordnet sind.

Optisch ansprechend und die Klemmeinrichtung 96 vor Verschmutzung oder Beschädigung schützend ist es, wenn vorteilhaft ein Gehäuse 113 auf die Klemmeinrichtung 96 aufgesteckt ist, wie beim Ausführungsbeispiel der Fall.

## Patentansprüche

1. Führungsvorrichtung für eine zum Bearbeiten eines Werkstücks (40) vorgesehene Hand-Werkzeugmaschine (10) mit einem Führungskörper (60a-60c) zum Führen an einer Führungsbasis (46), mit einer Führung-Verbindungsanordnung (70a-70c) zum Verbinden des Führungskörpers (60a-60c) mit der Hand-Werkzeugmaschine (10) und mit mindestens einer Koppeleinrichtung (52a-52c) zum Koppeln des Führungskörpers (60a-60c) mit der Führung-Verbindungsanordnung (70a-70c) mit einer insbesondere einstellbaren Distanz zwischen dem Führungskörper (60a-60c) und der Führung-Verbindungsanordnung (70a-70c), **dadurch gekennzeichnet, dass** die Koppeleinrichtung (52a-52c) mindestens ein zu einem Bandwickel (81) aufwickelbares Spreizband (53) aufweist.

2. Führungsvorrichtung nach Anspruch 1, **dadurch gekennzeichnet, dass** eine Länge (59) eines sich zwischen der Führung-Verbindungsanordnung (70a-70c) und dem Führungskörper (60a-60c) erstreckende Abschnitts (58) des mindestens einen Spreizbands (53) einstellbar ist und das mindestens eine Spreizband (53) mittels einer Halteeinrichtung (95) in der jeweiligen Länge (59) festlegbar ist.

3. Führungsvorrichtung nach Anspruch 2, **dadurch gekennzeichnet, dass** die Halteeinrichtung (95) eine Klemmeinrichtung (96) mit einem Klemmkörper (97) zum insbesondere im wesentlichen flächigen Klemmen des mindestens einen Spreizbands (53) gegen ein Widerlager (98) umfasst, wobei die Klemmeinrichtung (96) vorteilhaft ein Keilgetriebe (111) zum Betätigen des Klemmkörpers (97) aufweist.

4. Führungsvorrichtung nach Anspruch 2 oder 3, **dadurch gekennzeichnet, dass** die Halteeinrichtung (95) insbesondere lösbar an dem Führungskörper (60a-60c) angeordnet ist.

5. Führungsvorrichtung nach einem der vorhergehenden Ansprüche, **dadurch gekennzeichnet, dass** sie eine Wickeleinrichtung (80) zum Aufwickeln des mindestens einen Spreizbandes (53) auf den Bandwickel (81) aufweist.

6. Führungsvorrichtung nach Anspruch 5, **dadurch gekennzeichnet, dass** die Wickeleinrichtung (80) eine insbesondere als dosenartiges Gehäuse (82) ausgestaltete Bandwickelaufnahme (83) zur Aufnahme des Bandwickels (81) und/oder eine Wickelführung (84) zur Führung des Spreizbands (53) beim Aufwickeln des Bandwickels (81) aufweist und/oder dass die Wickeleinrichtung (80), insbesondere die Bandwickelaufnahme (83) und/oder die Wickelführung (84), das Spreizband (53) quer zur Wickelachse des Bandwickels (81) und/oder entgegengesetzt zu einem freien Ende des Spreizbands (53) und/oder bezüglich des Bandwickels (81) radial außen führt.

7. Führungsvorrichtung nach einem der vorhergehenden Ansprüche, **dadurch gekennzeichnet, dass** das Spreizband (53) eine Vorspannung mit einer Tendenz zu einem selbsttätigen Abwickeln des Spreizbands (53) von dem Bandwickel (81) aufweist, den es im aufgerollten Zustand bildet.

8. Führungsvorrichtung nach einem der vorhergehenden Ansprüche, **dadurch gekennzeichnet, dass** das mindestens eine Spreizband (53) eine Wölbung (55) quer zu seiner Längserstreckungsrichtung (56) aufweist, und dass die Wölbung (55) des mindestens einen Spreizbands (53) derart verläuft, dass beim Gebrauch der Führungsvorrichtung (50a-50c) bei einem Aufliegen der Führungsvorrichtung (50a-50c) auf einem Untergrund (42) ein zwischen freien Längsseiten (57) des mindestens einen Spreizbands (53) angeordneter mittlerer Abschnitt der Wölbung (55) einen größeren Abstand zu dem Untergrund (42) aufweist als die freien Längsseiten (57).

9. Führungsvorrichtung nach einem der vorhergehenden Ansprüche, **dadurch gekennzeichnet, dass** die Koppeleinrichtung (52a-52c) mindestens zwei in einem Abstand zueinander angeordnete Spreizbänder umfasst.

10. Führungsvorrichtung nach einem der vorhergehenden Ansprüche, **dadurch gekennzeichnet, dass** der Führungskörper (60a-60c) eine insbesondere winkelige Anlagekontur (67) zum Anlegen an die Führungsbasis (46) und/oder eine zu einer auf das Werkstück (40) auflegbaren Führungsschiene passende Gleitkontur und/oder einen Dorn (63) zum Eindringen in die Führungsbasis (46) aufweist.

11. Führungsvorrichtung nach einem der vorhergehenden Ansprüche, **dadurch gekennzeichnet, dass** die Führung-Verbindungsanordnung (70a-70c) mit der Hand-Werkzeugmaschine (10) in mindestens zwei unterschiedlichen Stellungen verbindbar ist, in denen das mindestens eine Spreizband (53) in insbesondere symmetrisch von verschiedenen, insbesondere von einander entgegengesetzten, Seiten der Hand-Werkzeugmaschine (10) absteht.

12. Führungsvorrichtung nach einem der vorhergehenden Ansprüche, **dadurch gekennzeichnet, dass** die Führung-Verbindungsanordnung (70a-70c) werkzeuglos mit der Hand-Werkzeugmaschine (10) verbindbar ist und/oder zu einer schubfesten und/oder zugfesten Verbindung der Führungsvorrichtung (50a-50c) mit der Hand-Werkzeugmaschine (10) bezüglich einer Längserstreckungsrichtung (56) des mindestens einen Spreizbands (53) ausgestaltet ist.

13. Führungsvorrichtung nach einem der vorhergehenden Ansprüche, **dadurch gekennzeichnet, dass** die Führung-Verbindungsanordnung (70a-70c) mindestens eine Führung-Steckanordnung (73) mit einer Steckaufnahme (74) und/oder einem Steckvorsprung, insbesondere in der Art eines Schwalbenschwanzes, zum Anstecken an eine Maschinen-Steckanordnung (31) der Hand-Werkzeugmaschine (10) aufweist.

14. Hand-Werkzeugmaschine (10), insbesondere Stichsäge, Hubsäge oder Oberfräse, mit einer Führungsvorrichtung (50a-50c) nach einem der vorhergehenden Ansprüche.

15. Hand-Werkzeugmaschine nach Anspruch 14, **dadurch gekennzeichnet, dass** sie mindestens eine Maschinen-Steckanordnung (31) zur Verbindung mit der Führung-verbindungsanordnung (70a-70c) der Führungsvorrichtung (50a-50c) aufweist.

## Claims

1. Guide device for a hand machine tool (10) intended for machining a work piece (40), with a guide body (60a - 60c) for guiding on a guide base (46), with a guide attachment arrangement (70a - 70c) to connect the guide body (60a - 60c) to the hand machine tool (10) and with at least one coupling device (52a - 52c) to couple the guide body (60a - 60c) with the guide attachment arrangement (70a - 70c) with a particularly adjustable distance between the guide body (60a - 60c) and the guide attachment arrangement (70a - 70c), **characterised in that** the coupling device (52a - 52c) includes at least one extending strip (53) which can wind up into a strip reel (81).

2. Guide device according to claim 1, **characterised in that** a length (59) of a section (58) of the at least one extending strip (53) extending between the guide attachment arrangement (70a - 70c) and the guide body (60a - 60c) is adjustable and the at least one extending strip (53) can be secured by means of a holding device (95) at the particular length (59) in question.

3. Guide device according to claim 2, **characterised in that** the holding device (95) comprises a clamping device (96) with a clamping body (97) for the particularly essentially flat clamping of the at least one extending strip (53) against a back support (98), whereby the clamping device (96) includes advantageously a wedge drive (111) to actuate the clamping body (97).

4. Guide device according to claim 2 or 3, **characterised in that** that the holding device (95) is arranged on the guide body (60a - 60c) in particular such that it can be released.

5. Guide device according to one of the foregoing claims, **characterised in that** it includes a winding device (80) to wind up the at least one extending strip (53) on to the strip reel (81).

6. Guide device according to claim 5, **characterised in that** the winding device (80) includes a strip reel receptacle (83) in the particular form of a can-type housing (82) to receive the strip reel (81) and / or a reel guide (84) to guide the extending strip (53) as the strip reel (81) is winding up and / or that the winding device (80), in particular the strip reel receptacle (83) and / or the reel guide (84), guides the extending strip (53) radially outwards transversely to the reel axis of the strip reel (81) and / or opposite to a free end of the extending strip (53) and / or in relation to the strip reel (81).

7. Guide device according to one of the foregoing claims, **characterised in that** the extending strip (53) includes pretensioning which tends to wind the extending strip (53) automatically out of the strip reel (81) which it forms in the rolled-up state.

8. Guide device according to one of the foregoing claims, **characterised in that** the at least one extending strip (53) includes a curvature (55) transverse to its elongation direction (56) and that the curvature (55) of the at least one extending strip (53) runs such that, when the guide device (50a - 50c) is being used and it is laid on a substrate (42), a section of the curvature (55) arranged centrally between open lengthwise sides (57) of the at least one extending strip (53) is at a greater distance from the substrate (42) than the open lengthwise sides (57).

9. Guide device according to one of the foregoing claims, **characterised in that** the coupling device (52a - 52c) comprises at least two extending strips arranged with a gap between each other.

10. Guide device according to one of the foregoing claims, **characterised in that** the guide body (60a - 60c) has an in particular angular support contour (67) to rest on the guide base (46) and / or a sliding contour matching a guide rail laid on the work piece (40) and / or a mandrel (63) to press into the guide base (46).

11. Guide device according to one of the foregoing claims, **characterised in that** the guide attachment arrangement (70a - 70c) can be connected to the hand machine tool (10) in at least two different places, in which the at least one extending strip (53) is offset in particular symmetrically from different, in particular opposing sides of the hand machine tool (10).

12. Guide device according to one of the foregoing claims, **characterised in that** the guide attachment arrangement (70a - 70c) can be connected to the hand machine tool (10) without the need for a tool and / or is designed to provide a connection, which is resistant in tension and / or shear, of the coupling device (50a - 50c) with the hand machine tool (10) relative to an elongation direction (56) of the at least one extending strip (53).

13. Guide device according to one of the foregoing claims, **characterised in that** the guide attachment arrangement (70a - 70c) includes at least one guide insert arrangement (73) with an insert receiver (74) and / or an insert projection, in particular in the form of a dovetail, to insert into a machine insertion arrangement (31) of the hand machine tool (10).

14. Hand machine tool (10), in particular a jigsaw, hacksaw or router, with a guide device (50a - 50c) according to one of the foregoing claims.

15. Hand machine tool according to claim 14, **characterised in that** it includes at least one machine insertion arrangement (31) to connect with the guide attachment arrangement (70a - 70c) of the guide device (50a - 50c).

## Revendications

1. Dispositif de guidage pour une machine-outil manuelle (10) prévue pour usiner une pièce (40), comportant un corps de guidage (60a-60c) pour le guidage au niveau d'une base de guidage (46), comportant un ensemble d'assemblage-guidage (70a-70c) servant à assembler le corps de guidage (60a-60c) à la machine-outil manuelle (10) et comportant au moins un système de couplage (52a-52c) servant à coupler le corps de guidage (60a-60c) à l'ensemble d'assemblage-guidage (70a-70c) à une distance en particulier réglable entre le corps de guidage (60a-60c) et l'ensemble d'assemblage-guidage (70a-70c), **caractérisé en ce que** le système de couplage (52a-52c) présente au moins une bande à expansion(53) pouvant être enroulée pour former un rouleau de bande (81).

2. Dispositif de guidage selon la revendication 1, **caractérisé en ce qu'**une longueur (59) d'une section (58) de ladite au moins une bande à expansion(53) s'étendant entre l'ensemble d'assemblage-guidage (70a-70c) et le corps de guidage (60a-60c) peut être ajustée, et **en ce que** ladite au moins une bande à expansion(53) peut être fixée dans la longueur respective (59) au moyen d'un système de maintien (95).

3. Dispositif de guidage selon la revendication 2, **caractérisé en ce que** le système de maintien (95) comporte un système de serrage (96) doté d'un corps de serrage (97) servant en particulier à serrer essentiellement à plat ladite au moins une bande à expansion(53) contre une butée (98), sachant que le système de serrage (96) présente de manière avantageuse une transmission à clavette (111) servant à actionner le corps de serrage (97).

4. Dispositif de guidage selon la revendication 2 ou 3, **caractérisé en ce que** le système de maintien (95) est disposé en particulier de manière amovible au niveau du corps de guidage (60a-60c).

5. Dispositif de guidage selon l'une quelconque des revendications précédentes, **caractérisé en ce qu'**il présente un système d'enroulement (80) servant à enrouler ladite au moins une bande à expansion(53) sur un rouleau de bande (81).

6. Dispositif de guidage selon la revendication 5, **caractérisé en ce que** le système d'enroulement (80) présente un logement de rouleau de bande (83) configuré en particulier comme un boîtier (82) à la manière d'une boîte servant à recevoir le rouleau de bande (81) et/ou un guidage d'enroulement (84) servant à guider la bande à expansion(53) lors de l'enroulement du rouleau de bande (81), et/ou **en ce que** le système d'enroulement (80), en particulier le logement de rouleau de bande (83), et/ou le guidage d'enroulement (84) conduisent radialement vers l'extérieur la bande à expansion(53) de manière transversale par rapport à l'axe d'enroulement du rouleau de bande (81) et/ou de manière opposée à une extrémité libre de la bande à expansion(53) et/ou par rapport au rouleau de bande (81).

7. Dispositif de guidage selon l'une quelconque des revendications précédentes, **caractérisé en ce que** la bande à expansion(53) présente une précontrainte avec une tendance à dérouler de manière automatique la bande à expansion(53) du rouleau de bande (81) formée par ladite bande à expansionà l'état enroulé.

8. Dispositif de guidage selon l'une quelconque des revendications précédentes, **caractérisé en ce que** ladite au moins une bande à expansion(53) présente un bombement (55) de manière transversale par rapport à la direction de son extension longitudinale (56), et **en ce que** le bombement (55) de ladite au moins une bande à expansion (53) s'étend de telle manière que lors de l'utilisation du dispositif de guidage (50a-50c), alors que le dispositif de guidage (50a-50c) repose sur le support (42), une section médiane du bombement (55), disposée entre des côtés longitudinaux (57) libres de la bande à expansion(53), présente un espacement plus grand par rapport au support (42) que les côtés longitudinaux libres (57).

9. Dispositif de guidage selon l'une quelconque des revendications précédentes, **caractérisé en ce que** le système de couplage (52a-52c) comporte au moins deux bandes à expansion disposées à une certaine distance l'une de l'autre.

10. Dispositif de guidage selon l'une quelconque des revendications précédentes, **caractérisé en ce que** le corps de guidage (60a-60c) présente un contour d'appui (67) en particulier angulaire servant à venir en appui sur la base de guidage (46) et/ou un contour de glissement adapté à une glissière pouvant être posée sur la pièce (40) et/ou un mandrin (63) destiné à être enfoncé dans la base de guidage (46).

11. Dispositif de guidage selon l'une quelconque des revendications précédentes, **caractérisé en ce que** l'ensemble d'assemblage-guidage (70a-70c) peut être relié en au moins deux endroits différents, à la machine-outil manuelle (10), dans lesquels ladite au moins une bande à expansion(53) fait saillie en particulier de manière symétrique de différents côtés, en particulier opposés les uns aux autres, de la machine-outil manuelle (10).

12. Dispositif de guidage selon l'une quelconque des revendications précédentes, **caractérisé en ce que** l'ensemble d'assemblage-guidage (70a-70c) peut être relié sans outil à la machine-outil manuelle (10) et/ou est configuré pour un assemblage, résistant au cisaillement et/ou à la traction, du dispositif de guidage (50a-50c) à la machine-outil manuelle (10) par rapport à une direction d'extension longitudinale (56) de ladite au moins une bande à expansion (53).

13. Dispositif de guidage selon l'une quelconque des revendications précédentes, **caractérisé en ce que** l'ensemble d'assemblage-guidage (70a-70c) présente au moins un ensemble d'emboîtement-guidage (73) doté d'un logement d'emboîtement (74) et/ou d'une partie faisant saillie d'emboîtement, en particulier sous la forme d'une queue d'aronde, servant à s'emboîter au niveau d'un ensemble d'emboîtement de machine (31) de la machine-outil manuelle (10).

14. Machine-outil manuelle (10), en particulier scie sauteuse, scie à mouvement alternatif ou défonceuse, équipée d'un dispositif de guidage (50a-50c) selon l'une quelconque des revendications précédentes.

15. Machine-outil manuelle selon la revendication 14, **caractérisée en ce qu'**elle présente au moins un ensemble d'emboîtement de machine (31) servant à l'assemblage à l'ensemble d'assemblage-guidage (70a-70c) du dispositif de guidage (50a-50c).
